# EUROPÄISCHE PATENTSCHRIFT

(11) **EP 2 501 954 B1**
(45) Veröffentlichungstag und Bekanntmachung des Hinweises auf die Patenterteilung: **26.08.2015**
(21) Anmeldenummer: 10768016.7
(22) Anmeldetag: 19.10.2010
(51) Int. Cl.: F16F 9/04, B29D 22/00, B29L 22/02, B29K 75/00, B32B 33/00, B29D 22/02

(54) **SCLAUCHFÖRMIGER KÖRPER MIT EINER REFLEKTIERENDEN SCHUTZSCHICHT UND VERFAHREN ZU DESSEN HERSTELLUNG**
TUBULAR ELEMENT HAVING A REFLECTIVE PROTECTIVE COATING AND METHOD FOR THE PRODUCTION THEREOF
CORPS TUBULAIRE AYANT UNE COUCHE DE PROTECTION RÉFLÉCHISSANTE ET PROCÉDÉ DE FABRICATION

(30) Priorität: 16.11.2009 DE 102009044533
(43) Veröffentlichungstag der Anmeldung: 26.09.2012
(73) Patentinhaber: ContiTech Luftfedersysteme GmbH, 30165 Hannover (DE)
(72) Erfinder: RECK, Siegfried, 31582 Nienburg (DE); MAHNKEN, Claus-Lüder, 27367 Ahausen (DE); GAWINSKI, Hubertus, 31867 Lauenau (DE); TEVES, Reinhard, 30926 Seelze (DE)
(74) Vertreter: Finger, Karsten
(86) Internationale Anmeldenummer: PCT/EP2010/065667
(87) Internationale Veröffentlichungsnummer: WO 2011/057880

(56) Entgegenhaltungen:
- EP-A2- 1 094 257
- DE-A1- 3 339 683
- DE-A1- 10 230 306
- DE-A1-102007 023 995
- US-A1- 2004 068 036
- Franck, A.: "Kunststoff-Kompendium", 31. Dezember 1984 (1984-12-31), Vogel-Buchverlag, Würzburg, XP002615597, ISBN: 3-8023-0135-8 Seiten 207-211, Seite 207 - Seite 211
- Saechtling H.: "Kunststoff-Taschenbuch", 31. Dezember 1995 (1995-12-31), Carl Hanser Verlag, München Wien, XP002615596, ISBN: 3-446-17855-4 Seiten 494-498, Seite 495 - Seite 497

## Beschreibung

Die Erfindung betrifft einen schlauchförmigen Körper mit einem Grundkörper aus einem polymeren Werkstoff mit elastischen Eigenschaften, bestehend wenigstens aus einer Innenschicht und Außenschicht, wobei die Außenschicht vollständig oder teilweise mit einer Schutzschicht versehen ist, wobei die Schutzschicht mit dem Grundkörper einen Haftverbund bildet und einen polymeren Basiswerkstoff umfasst, in dem Mikropartikel mit Reflexionsfähigkeit gegen elektromagnetische Strahlen eingemischt sind. Diese Schutzschicht wird auch als reflektierende Funktionshaut bezeichnet. Die Erfindung betrifft ferner ein Verfahren zur Herstellung eines derartigen Artikels.

Schutzschichten für verschiedene Anwendungszwecke, wie bspw. zur Erzielung von Farbechtheit und Lichtbeständigkeit auf flexiblen Substraten (DE 33 39 683 A1), zur Ladungsableitung (DE 102 30 306 A1), zur Ausbildung von Leitfähigkeiten auf flexiblen nicht-leitfähigen Substraten (EP 10 94 257 A2) oder zur Erhöhung der Emissionsfähigkeit (US 2004-0068036 A1) sind bereits vielfältig bekannt.

Zur Optimierung des Wärmeschutzes wird in der Offenlegungsschrift WO 2008/141857 A1 eine Schutzschicht für Oberflächen von elastomeren Elementen, insbesondere für die Balgwand eines Luftfederbalges, beschrieben. Die Schutzschicht ist dabei aus einem Fluorkautschuk mit eingebetteten Mikropartikeln gebildet, wobei die Mikropartikel gegen elektromagnetische Strahlungen, insbesondere Wärmestrahlen, eine hohe Reflexionsfähigkeit aufweisen. Diese Mikropartikel, die auch als Reflexionspartikel bezeichnet werden, bestehen insbesondere aus Aluminium, das im Fluorkautschuk eingemischt ist. Außerdem wirkt eine derartige Schutzschicht zusätzlich gegen Abrieb.

Mit der Schutzschichtkonzeption gemäß WO 2008/141857 A1 sind jedoch folgende Nachteile verbunden:
- Die Schutzschicht trägt auf. So ist es möglich, dass beim Ein- und Ausfedern eines Luftfederbalges Materialpartikel der Funktionshaut auf der Oberfläche des Abrollkolbens verbleiben, was die Federfunktion beeinträchtigt.
- Bei dynamisch belasteten Artikeln wird die Schutzschicht beschädigt, beispielsweise bei Luftfederbälgen durch wiederholte Abrollvorgänge.
- Der Fluorkautschuk benötigt einen Vermittler für die Haftung zum elastischen Grundkörper des Artikels. Hinzu kommt, dass Fluorkautschuk Strahlungsenergie dissipiert und somit das Rückstrahlvermögen von der diffus reflektierenden Oberfläche der Schutzschicht senkt. Außerdem ist Fluorkautschuk teuer.
- Es wird eine relativ hohe Menge an reflektierenden Mikropartikeln benötigt.

Nicht- schlauchförmige Körper, wie bspw. Antriebsriemen werden zur Erhöhung der Abriebsbeständigkeit sowie zusätzlich zur Geräuschreduzierung insbesondere im Bereich der Kraftübertragungszone mit einer Schutzschicht versehen. Der diesbezügliche Stand der Technik ist:
- Eingesetzt wird eine Flockauflage (DE 100 16 351 A1), insbesondere in Form eines Baumwoll- oder Aramidflocks, oder eine dünne mit Fasern (z.B. Aramidfasern) gefüllte elastische Polymerschicht, beispielsweise nach der Offenlegungsschrift DE 38 23 157 A1, wobei die Anhaftung der Flockauflage zumeist mittels einer Streichlösung erfolgt.
- Verwendet wird eine Textilauflage in Form eines Gewebes oder Gestricks, beispielsweise nach der Patentschrift US 3 981 206.
- Verwendet wird auch eine Textilauflage in Form eines Gewirkes. Diesbezüglich wird insbesondere auf die Offenlegungsschrift DE 10 2006 007 509 A1 verwiesen. Die Kettwirkware besteht dabei aus einem ersten Garn, insbesondere aus einem Polyamid oder einem Polyester, und aus einem zweiten Garn, insbesondere aus einem Polyurethan.
- Nach einer neueren Entwicklung gemäß DE 10 2008 012 044 A1 werden anstelle der Textilauflagen oder in Kombination mit diesen eine Folie (z.B. PTFE-Folie) oder ein Folienverbund (z.B. PA-PTFE-Folienverbund) eingesetzt, insbesondere unter dem zusätzlichen Aspekt der ölbeständigen Ausrüstung eines Antriebsriemens.
- Die Schutzschicht ist eine Reaktionsmasse, wobei ein Isocyanat mit wenigstens zwei NCO-Gruppen mit Wasser und/oder einem Diol und/oder einem Polyol zu einem Polymerisat ausreagiert. Diesbezüglich wird insbesondere auf die neuere Entwicklung gemäß EP 2 101 079 A2 verwiesen.

Bisheriger Entwicklungsschwerpunkt bei Antriebsriemen war die Bereitstellung einer abriebsbeständigen wie auch zusätzlich ölbeständigen Schutzschicht, und zwar bei gleichzeitiger Geräuschreduzierung. Der Aspekt der zusätzlichen reflektierenden Schutzschicht wurde jedoch vernachlässigt.

Die Aufgabe der Erfindung besteht nun darin, einen schlauchförmigen Körper mit wenigstens einer Innenschicht und einer Außenschicht bereitzustellen, dessen Außenschicht vollständig oder teilweise gegen elektromagnetische Strahlen aller Art (Wärmestrahlen, UV-Strahlen etc.) geschützt ist, wobei gleichzeitig die reflektierende Schutzschicht eine hohe Lebensdauer aufweist sowie ferner einen polymeren Basiswerkstoff umfasst, der auch ohne einen zusätzlichen Haftvermittler mit dem elastischen Grundkörper des Artikels einen dauerfesten Haftverbund bildet. Zudem soll die reflektierende Schutzschicht einer Vielzahl von Artikelanwendungen zugänglich sein. Gelöst wird diese Aufgabe dadurch, dass der polymere Basiswerkstoff der reflektierenden Schutzschicht ein Polymerisat ist, das zumindest aus einem ersten Reaktionspartner in Form eines Isocyanats mit wenigstens zwei NCO-Gruppen und einem zweiten Reaktionspartner in Form von Wasser gebildet ist.

Durch die Reaktion mit Wasser liegen in dem Polymergerüst zumindest einige Harnstoffgruppen vor.

Bei der Bildung des Polymerisats der Schutzschicht kann zudem ein dritter Reaktionspartner in Form eines Diols und/oder Polyols beteiligt sein, wobei dieser dritte Reaktionspartner zumeist lediglich in geringen Mengen auftritt, beispielsweise in Form von 1,6-Hexandiol. In dem Polymergerüst liegen somit zusätzlich einige Urethangruppen vor.

In Bezug auf die kleinsten Isocyanatbautsteine (Monomere) sind insbesondere folgende Gruppen zu erwähnen:
- Das Isocyanat weist eine aliphatische Gerüststruktur auf, wobei die Kohlenstoffanzahl 4 bis 12 beträgt. Zu nennen sind hier insbesondere Tetramethylendiisocyanat, Hexamethylendiisocyanat (HDI), Dodecamethylendiisocyanat, 1,4-Diisocyanatocyclohexan und Isophorondiisocyanat (IPPD). Von besonderer Bedeutung ist HDI.
- Das Isocyanat weist eine aliphatisch-aromatische Gerüststruktur auf. Zu nennen ist hier insbesondere Diphenylmethandiisocyanat (MDI).

Da die oben genannten Isocyanate leicht flüchtig und somit schwer verarbeitbar sowie zudem toxisch sind, liegt das Isocyanat vor der Reaktion mit Wasser bzw. zusätzlich mit einem Diol und/oder Polyol in einer höhermolekularen Form vor. Von besonderer Bedeutung sind dabei folgende Gruppen, nämlich das Trimer mit symmetrischer oder asymmetrischer Konstitution, das Biuret oder das Urethdion. In der folgenden Übersicht sind die bevorzugten Isocyanat-Typen auf der Basis von HDI und ihre Handelsbezeichnungen der Firma Bayer AG aufgeführt:
HDI Biuret (Desmodur N100)
HDI Trimer (Desmodur N3600)
HDI Trimer (Desmodur N3300)
HDI Urethdion (Desmodur N3400)
HDI Trimer Asymmetrisch (Desmodur XP2410)

Das auf diese Weise gebildete Polymerisat als polymerer Basiswerkstoff der reflektierenden Schutzschicht zeichnet sich durch eine hervorragende Anhaftung zum Grundkörper des Artikels aus, die den Einsatz eines zusätzlichen Haftvermittlers überflüssig macht. Der polymere Werkstoff des Artikelgrundkörpers ist zumeist ein Elastomer oder ein thermoplastisches Elastomer, da hiermit elastische Eigenschaften verbunden sind.

Die reflektierenden Mikropartikel bestehen vorzugsweise aus Metall, insbesondere aus Aluminium. Diese Mikropartikel sind pulverförmig, mikroplättchenförmig oder mikrogranulatförmig in dem Polymerisat eingemischt und verleihen letztlich der Schutzschicht die geforderte Reflexionsfunktion. Die mikroplättchenförmige Variante spielt dabei unter dem Gesichtspunkt der Ausbildung eines Mikrospiegels bei gleichzeitig guter Verankerung innerhalb des polymeren Basiswerkstoffes eine besondere Rolle. In Verbindung mit der Figurenbeschreibung wird hierauf noch näher eingegangen. Durch die Verwendung von Aluminium wird zudem in Verbindung mit dem Polymerisat eine helle Funktionshaut erzeugt, die in optimaler Weise reflektierend wirkt.

In der Schutzschicht kann zudem ein medienbeständiger, insbesondere ölbeständiger Füllstoff eingearbeitet sein, hier vorzugsweise in Pulverform. Zu nennen sind hier insbesondere folgende Polymere, die sich zudem durch eine helle Farbe auszeichnen:
Polytetrafluorethylen (PTFE)
Modifiziertes Polytetrafluorethylen (TFM)
Fluorcthylenpolymer (FEP)
Perfluoralkylvinylether-Tetraethylen-Copolymer (PFA)
Ethylen-Tetrafluorethylen-Copolymer (ETFE)
Polyvinylfluorid (PVF)
Polyvinylidenfluorid (PVDF)
Ultrahochmolekulares Polyethylen (UHMWPE)

Von herausragender Bedeutung ist dabei PTFE. Gleichzeitig kann mit dieser Maßnahme die Gleitfähigkeit der Schutzschicht verbessert werden.

Die neue reflektierende Schutzschicht kommt für schlauchförmige Körper zur Anwendung. Schlauchförmige Körper umfassen die Produktgruppe Förderschläuche aller Art, Luftfederbälge (Kreuzlagenbälge, Axialbälge) und Kompensatoren in verschieden Ausführungen (z.B. Torsionskompensator, Lateralkompensator). Das Aufbaukonzept ist dabei überall gleich, nämlich umfassend eine Außenschicht (Mantel), eine Innenschicht (Seele) sowie insbesondere einen eingebetteten ein- oder mehrlagigen Festigkeitsträger. Zusätzlich kann noch wenigstens eine Zwischenschicht, beispielsweise zwischen zwei Festigkeitsträgerlagen, vorhanden sein. Bei Förderschlauchen kann die Innenschicht noch einen medienbeständigen Inliner, beispielsweise in Form einer PTFE-Folie, aufweisen, beispielsweise bei Chemikalienschläuchen. Auch eine zusätzliche Barriereschicht mit geringer Permeationsrate, insbesondere in Form von Folien, beispielsweise als Polyamidfolie, kann vorhanden sein, wobei hier insbesondere Klimaschläuche zu nennen sind. Die Außenschicht eines schlauchförmigen Körpers, insbesondere die gesamte Oberfläche der Außenschicht, ist mit der reflektierenden Schutzschicht ausgestattet.

Die Aufgabe der Erfindung besteht ferner in der Bereitstellung eines Verfahren zur Herstellung eines schlauchförmigen Körpers mit einem Grundkörper aus einem polymeren Werkstoff mit elastischen Eigenschaften, bestehend wenigstens aus einer Innenschicht und Außenschicht, wobei die Außenschicht vollständig oder teilweise mit einer Schutzschicht versehen ist, wobei die Schutzschicht mit dem Grundkörper einen Haftverbund bildet und einen polymeren Basiswerkstoff umfasst, in dem Mikropartikel mit Reflexionsfähigkeit eingemischt sind. Neben der bereits erwähnten Schutzschichtanforderung im Zusammenhang mit der auf den schlauchförmigen Körper bezogenen Aufgabenstellung soll eine einfache wie auch kostengünstige Verfahrenstechnologie gewährleistet sein.

Gelöst wird diese verfahrenstechnische Aufgabe durch wenigstens folgende Verfahrensschritte:
- der Grundkörper des Artikels wird aus einer vulkanisierbaren Polymermischung unter Ausbildung des Artikelrohlings gefertigt (Verfahrensschritt I);
- auf die Oberfläche des Artikelrohlings wird vollständig oder teilweise eine Beschichtungsmasse aufgetragen, die eine Suspension ist, bestehend wenigstens aus einem Lösungsmittel, einem ersten Reaktionspartner in Form eines Isocyanats mit wenigstens zwei NCO-Gruppen und den Mikropartikeln mit Reflexionsfähigkeit (Verfahrensschritt II);
- unter Verdunsten des Lösungsmittels bei Bildung einer Suspension mit sich verändernden Konzentrationsstufen reagiert das Isocyanat zumindest mit einem zweiten Reaktionspartner in Form von Wasser zu einer noch flexibel verformbaren Masse (Verfahrensschritt III);
- nach einer Trocknungszeit wird der Artikelrohling vulkanisiert, wobei zumindest innerhalb der sich bildenden Oberflächenschicht der Schutzschicht ein Ausreagieren der Reaktionspartner erfolgt, und zwar unter Ausbildung einer Schutzschicht mit Reflexionsfähigkeit sowie unter Ausbildung eines dauerfesten Haftverbundes mit dem Grundkörper des Artikels (Verfahrensschritt IV).

Im Folgenden werden die einzelnen Verfahrenschritte unter Einbezug vorteilhafter Maßnahmen erläutert.

### Verfahrensschritt I

Bei der Bildung des Grundkörpers aus einer vulkanisierbaren Polymermischung kommen insbesondere folgende beiden Werkstoffvarianten zum Einsatz:

### - Variante A

Die Polymermischung ist eine vulkanisierbare thermoplastfreie Kautschukmischung, enthaltend:
a) wenigstens eine Kautschukkomponente sowie
b) Mischungsingredienzien.

Als Kautschukkomponenten sind insbesondere zu nennen:
Ethylen-Propylen-Kautschuk (EPM)
Ethylen-Propylen-Dien-Kautschuk (EPDM)
Nitrilkautschuk (NBR)
(teil)hydrierter Nitrilkautschuk (HNBR)
Fluor-Kautschuk (FKM)
Chloropren-Kautschuk (CR)
Naturkautschuk (NR)
Styrol-Butadien-Kautschuk (SBR)
Isopren-Kautschuk (IR)
Butylkautschuk (IIR)
Brombutylkautschuk (BIIR)
Chlorbutylkautschuk (CIIR)
Butadien-Kautschuk (BR)
Chloriertes Polyethylen (CM)
Chlorsulfoniertes Polyethylen (CSM)
Polyepichlorhydrin (ECO)
Ethylen-Vinylacetat-Kautschuk (EVA)
Acrylat-Kautschuk (ACM)
Ethylen-Acrylat-Kautschuk (AEM)
Silikonkautschuk (MQ, VMQ, PVMQ, FVMQ; DE 10 200b 058 470 A1)
Fluorierter Methylsilikonkautschuk (MFQ)
Perfluorinierter Propylen-Kautschuk (FFPM)
Perfluorcarbon-Kautschuk (FFKM)
Polurethan (PU)

Die vorgenannten Kautschuktypen können unverschnitten sein. Auch der Einsatz eines Verschnittes, insbesondere in Verbindung mit einem der vorgenannten Kautschuktypen, beispielsweise ein NR/BR-Verschnitt oder ein BR/SBR-Verschnitt, ist möglich.

Von besonderer Bedeutung sind: EPM, EPDM, SBR, BR, CR, NR, NBR, HNBR, FKM, ACM, AEM oder Silikonkautschuk.

Welcher Kautschuktyp bevorzugt wird, hängt von der Artikelart ab. Besonders Vielfältig ist der Einsatz von verschiedenen Kautschuktypen bei schlauchförmigen Körpern.

Die üblichen Mischungsingredienzien umfassen wenigstens einen vernetzer oder ein Vernetzersystem (Vernetzungsmittel und Beschleuniger). Zusätzliche Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoffe (z.B. Farbpigmente, Verstärkungsfasern). Diesbezüglich wird auf den allgemeinen Stand der Kautschukmischungstechnologie verwiesen.

### - Variante B

Die Polymermischung ist eine teilvulkanisierbare Polymermischung, enthaltend:
a) wenigstens eine Thermoplastkomponente;
b) wenigstens eine Kautschukkomponente, die zumindest teilvernetzbar ist sowie
c) Mischungsingredienzien.

Die bevorzugten Thermoplastkomponenten sind ein:
Polyolefin, insbesondere Polyethylen (PE) oder Polypropylen (PP);
Polystyrol;
Polyamid (PA), beispielsweise PA6 oder PA6.6;
Polyester (PES).

Als Kautschukkomponenten sind hier insbesondere EPM, EPDM, SBR, CR, NR, NBR, FKM, ACM oder AEM zu nennen, die insbesondere mit keiner weiteren Kautschukkomponente verschnitten sind.

Hinsichtlich der üblichen Mischungsingredienzien wird auf die Mischungstechnologie zu der Variante A, insbesondere auf die Lehre gemäß der Offenlegungsschrift DE 100 04 632 A1 verwiesen.

Von besonderer Bedeutung ist die Werkstoffentwicklung gemäß Variante A.

In den Grundkörper des Artikelrohlings wird zumeist noch ein ein- oder mehrlagiger Festigkeitsträger eingearbeitet. Bei manchen Schlauchanwendungen wird insbesondere noch zusätzlich eine Barriereschicht mit geringer Permeationsrate eingearbeitet.

Bei der Herstellung von schlauchförmigen Körpern kommen je nach der Dimension Dornwerkzeuge oder Extrusionswerkszeuge zum Einsatz.

### Verfahrensschritt II

Die Beschichtungsmasse für den Oberflächenauftrag eines Artikelrohlings ist eine Suspension (Dispersion), bestehend wenigstens aus einem Lösungsmittel (Dispergiermittel), einem ersten Reaktionspartner in Form eines Isocyanates mit wenigstes zwei NCO-Gruppen und den Mikropartikeln mit Reflexionsfähigkeit. Das Lösungsmittel ist insbesondere Toluol und/oder Xylol. Hinsichtlich Werkstoffdetails des Isocyanats, insbesondere in Form der bevorzugten Isocyanattypen, und der Mikropartikel wird auf das bereits Erwähnte verwiesen.

In Bezug auf die Suspension der Beschichtungsmasse wird das Isocyanat in einer Menge von 20 Gew.-% bis 50 Gew.-%, insbesondere 30 Gew.-% bis 50 Gew.-%, insbesondere wiederum 35 Gew.-% bis 45 Gew.-%, eingesetzt.

In Bezug auf die Suspension der Beschichtungsmasse liegen die Mikropartikel mit Reflexionsfähigkeit in einer Menge von 5 Gew.-% bis 40 Gew.-%, insbesondere 10 Gew.-% bis 35 Gew.-%, insbesondere wiederum 15 Gew.-% bis 30 Gew.-%, vor.

Weitere Bestandteile der Suspension können ein Diol und/oder Polyol und/oder ein medienbeständiger Füllstoff, insbesondere PTFE, sein. Das Diol und/oder Polyol kommt dabei insbesondere in geringen Mengen vor, insbesondere in Bezug auf die Suspension der Beschichtungsmasse bei einer Menge von ≤ 5 Gew.-%. Bei gleichem Bezugssystem ist die Menge des medienbeständigen Füllstoffes kleiner als die der Mikropartikel mit Reflexionsfähigkeit.

In der folgenden Tabelle sind vier Suspensionsvarianten α bis δ in Gew.-% als Beispiele für eine derartige Beschichtungsmasse angegeben.

| **Bestandteile** | **α** | **β** | **γ** | **δ** |
|---|---|---|---|---|
| HDI Biuret (Desmodur N100) | 40 | 40 | 40 | 40 |
| Aluminiumpartikel | 25 | 25 | 20 | 20 |
| Toluol | 35 | 30 | 30 | 25 |
| 1,6 Hexandiol | - | 5 | - | 5 |
| PTFE Pulver | - | - | 10 | 10 |

Während der Suspensionsbildung, beispielsweise in einem Innenmischer, kann bei den Beispielen β und δ bereits ein Teil des Hexandiols mit dem HDI Biuret reagieren. Zumeist erfolgt jedoch eine diesbezügliche Reaktion erst im Rahmen der Verfahrensschritte III und/oder IV.

Die hier angegebenen Mengenangaben beziehen sich auf den Ausgangszustand der Suspension, und zwar im Rahmen deren Herstellung.

### Verfahrensschritt III

Nach dem Auftrag der Beschichtungsmasse auf die Oberfläche des Artikelrohlings verdunstet das Lösungsmittel bei Bildung einer Suspension mit sich verändernden Konzentrationsstufen, wobei das Isocyanat zumindest mit einem zweiten Reaktionspartner in Form von Wasser zu einem Polyharnstoff reagiert, wobei mit zunehmendem Verdunstungsgrad die Reaktionsfähigkeit des Isocyanats zunimmt. Das Wasser liegt zumeist als Umgebungsfeuchtigkeit vor. Auch der Einsatz von Wasserdampf ist möglich.

Liegt zusätzlich ein Diol und/oder Polyol in der Suspension vor (Beispiele β und δ), so bildet sich im Rahmen der Gesamtreaktion ein Polymerisat mit Harnstoffgruppen wie auch Polyurethangruppen.

In dieser Phase ist die Beschichtungsmasse noch eine flexibel verformbare Masse und daher gut bearbeitbar, beispielsweise tiefziehfähig.

### Verfahrensschritt IV

Nach einer Trocknungszeit von wenigstens 1 Stunde, insbesondere bei einer Trocknungszeit von wenigstens 24 Stunden, vorzugsweise bei Raumtemperatur, wird der Artikelrohling wenigstens 10 Minuten, insbesondere wenigsten 20 Minuten, lang bei 130 °C bis 200 °C, insbesondere bei 180 °C, vulkanisiert, wobei zumindest innerhalb der äußeren Artikeloberfläche ein vollständiges Ausreagieren der Reaktionspartner, umfassend das Isocyanat, Wasser sowie gegebenenfalls zusätzlich ein Diol und/oder Polyol, erfolgt, und zwar unter Ausbildung einer reflektierenden Schutzschicht. Außerdem ist diese abriebsbeständig. Gleichzeitig bildet sich ein dauerfester Haftverbund der Schutzschicht mit dem elastischen Grundkörper des Artikels aus. Der zusätzliche Einsatz eines Haftvermittlers ist nicht mehr erforderlich. Der elastische Grundkörper erfasst alle Vulkanisatbauteile. Bei dem schlauchförmigen Körper sind dies die Innenschicht und Außenschicht sowie zumeist die eventuell noch vorhandenene/n Zwischenschicht/en.

In Verbindung mit der Figurenbeschreibung (Fig. 2a bis 2d) werden noch verfahrenstechnische Details dargelegt.

Die Erfindung wird nun anhand von Ausführungsbeispielen unter Bezugnahme auf schematische Zeichnungen erläutert. Es zeigen:
- Fig. 1a: eine Luftfeder-Anordnung;
- Fig. 1b: den Schichtenaufbau eines Luftfederbalges mit reflektierender Schutzschicht;
- Fig. 1c: die Details der reflektierenden Schutzschicht im Zusammenwirken mit der Außenschicht eines Luftfederbalges;
- Fig. 2a: einen Luftfederbalgrohling mit aufgetragener Beschichtungsmasse in Form einer Suspension;
- Fig. 2b: einen Luftfederbalgrohling mit einer ersten Konzentrationsstufe der Suspension unter gleichzeitiger Isocyanat-Diffusion;
- Fig. 2c: einen Luftfederbalgrohling mit einer zweiten Konzentrationsstufe der Suspension bei verdampfendem Lösungsmittel unter Ausbildung einer Grenzschicht;
- Fig. 2d: Ausbildung einer Segretationsschicht unter dem Einfluss von Wasserdampf;
- Fig. 3: ein Vergleichsdiagramm mit den Kurven a und b.

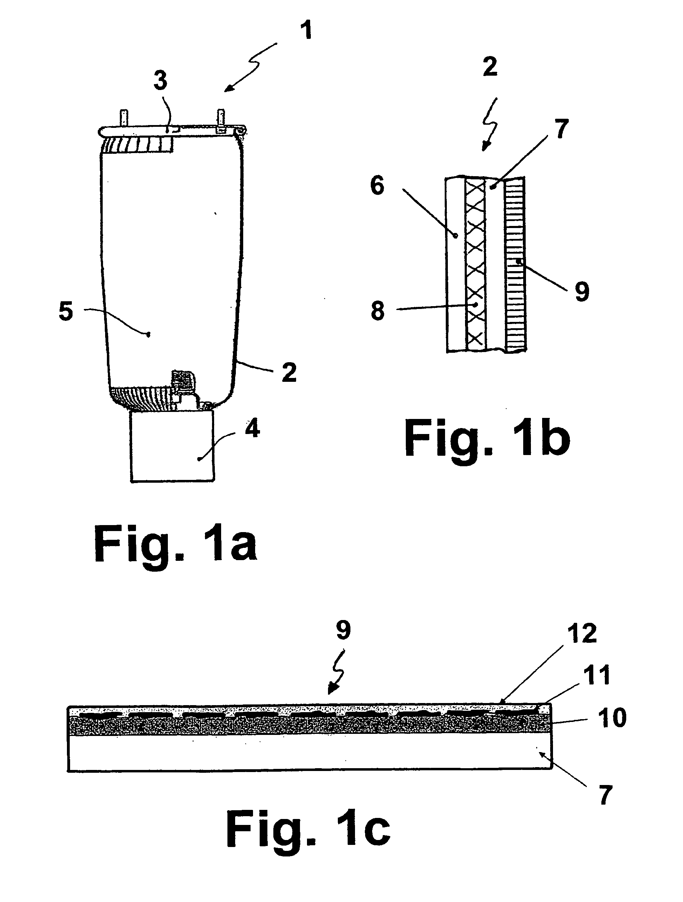

Fig. 1a zeigt eine Luftfeder-Anordnung 1, umfassend einen Luftfederbalg 2 sowie die beiden Anschlussbauteile Deckel 3 und Abrollkolben 4, und zwar unter Ausbildung einer volumenelastischen Luftkammer 5.

Fig. 1b zeigt nun den Schichtenaufbau eines fertig gestellten Luftfederbalges 2. Der Luftfederbalg besteht dabei aus einer Innenschicht 6 und Außenschicht 7 als elastischer Grundkörper, beispielsweise aus einer vulkanisierten Kautschukmischung auf der Basis von EPDM, einer zwischen der Innenschicht 6 und Außenschicht 7 eingebetteten Festigkeitsträgerschicht 8, beispielsweise in Form eines Polyamid-Gewebes, sowie aus einer Schutzschicht 9 mit Reflexionsfähigkeit, die mit der Außenschicht 8 in direkter Verbindung steht.

Fig. 1c zeigt schließlich Details der Schutzschicht 9 des ebenfalls fertig gestellten Luftfederbalges, und zwar anhand der Reaktion eines Isocyanats, beispielsweise als HDI Biuret, mit ausschließlich Wasser. Dabei umfasst die Schutzschicht 9 zumeist eine Grenzschicht 10, in der sich vorrangig eine komplexe Polymerisation des Isocyanats zu einem Polyisocyanat abspielt, sowie eine Oberflächenschicht 12, bestehend aus dem Reaktionsprodukt Polyharnstoff, das thermisch sehr stabil ist. Die direkte Anhaftung an die Außenschicht 7 des Luftfederbalges übernimmt hier die Grenzschicht 10, die sich durch eine besonders gute Haftfähigkeit zum elastischen Grundkörper auszeichnet. In die Schutzschicht 9 sind nun Metallpartikel 11, insbesondere Aluminiumpartikel, eingemischt. Diese Metallpartikel 11 erfassen dabei die Grenzschicht 10 unter dem Gesichtspunkt der Verankerung sowie die Oberflächenschicht 12 unter dem Aspekt eines Mikrospiegels. Die Ausbildung dieses Mikrospiegels erfolgt bevorzugt bei mikroplättchenförmigen Metallpartikeln. Im Hintergrund eines Sedimentationsvorganges während der Herstellung des Luftfederbalges mit der Schutzschicht 9 tritt der Mikrospiegel zumeist nicht bis an die Oberfläche. Der Mikrospiegel übernimmt dabei die eigentliche Funktion der Reflexionsfähigkeit und somit die Schutzfunktion gegenüber elektromagnetische Strahlen aller Art. Dabei kommt bei Einsatz der hellen Aluminiumpartikel der reflektierende Effekt am besten zur Geltung. Das gesamte Werkstoffkonzept unter Einbezug des Polymerisates trägt zudem zu einer hohen Lebensdauer bei.

Liegt als weiterer Reaktionspartner eine Diol und/oder Polyol in geringen Mengen vor, beispielsweise als 1,6-Hexandiol, so ist die Oberflächenschicht 12 ein Polymerisatgebilde mit Harnstoffgruppen und Polyurethangruppen, das ebenfalls thermisch sehr stabil ist.

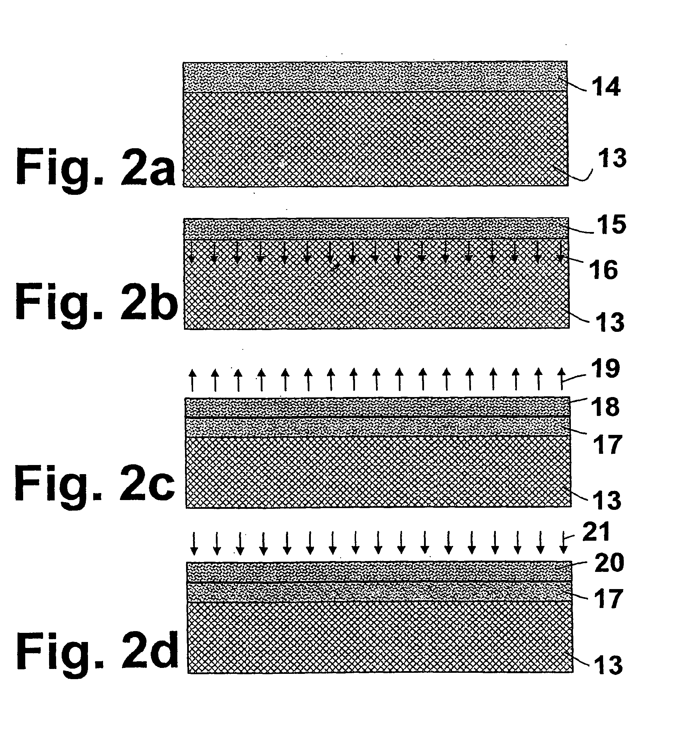

Die Fig. 2a bis 2d zeigen verfahrenstechnische Details bei der Ausbildung der reflektierenden Schutzschicht gemäß Fig. 1c. Der Luftfederbalgrohling 13, umfassend eine Innenschicht und Außenschicht aus einer vulkanisierbaren Polymermischung, beispielsweise aus einer peroxidisch vernetzbaren EPDM-Mischung, und eine eingebettete Festigkeitsträgerschicht, ist hier ohne Schichtendetails nur schematisiert dargestellt. Die wesentlichen chemischen und physikalischen Abläufe sind im Einzelnen:
- Die Suspension 14 besteht beispielsweise aus Toluol, einem Isocyanat in Form eines HDI Biurets und aus Aluminiumpartikeln. Weitere Bestandteile enthält die Suspension im Rahmen dieses Ausführungsbeispiels nicht. Hinsichtlich des Mengenverhältnisses wird beispielsweise auf die Suspensionsvariante α der Tabelle verwiesen. Diese Suspension 14 wird als Beschichtungsmasse auf den Luftfederbalgrohling 13 aufgebracht (Fig. 2a).
- Das HDI Biuret dringt mit Hilfe des Toluols im Rahmen einer Isocyanat-Diffusion 16 (Pfeilrichtung) in die Außenschicht des Luftfederbalgrohlings 13 ein, und zwar unter Ausbildung einer ersten Konzentrationsstufe 15 der Suspension (Fig. 2b).
- Das Toluol verdampft im Bereich der Verdampfungszone 19 (Pfeilrichtung) aus der Suspension und dem Luftfederbalgrohling 13 an die Umgebung. Dabei bildet sich eine Grenzschicht 17 aus, wo eine Verankerung des HDI Biurets bzw. des aus ihm hervorgehenden Polyisocyanats an der Oberfläche des Luftfederbalgrohlings 13 erfolgt. Innerhalb dieser Grenzschicht 17 konzentrieren sich im Rahmen des Verdampfungsprozesses die Aluminiumpartikel, wobei sich eine zweite Konzentrationsstufe 18 bildet (Fig. 2c).
- Während der Verdampfung des Toluols reagiert das HDI Biuret mit dem Wasserdampf 21 (Pfeilrichtung) zu Polyharnstoff, wobei mit zunehmender Verdampfung des Toluols die Reaktionsfähigkeit zunimmt. Neben der Grenzschicht 17, in der die Aluminiumpartikel konzentriert vorhanden sind, bildet sich eine Segretationsschicht 20, die im Wesentlichen frei von Aluminiumpartikeln ist (Fig. 2d).

Nach der Vulkanisation des Luftfederbalgrohlings 13 bildet sich die wirksame reflektierende Schutzschicht 9 (Fig. 1c), gebildet aus der Grenzschicht 17 und aus der aus der Segretationsschicht 20 hervorgehenden Oberflächenschicht. Innerhalb der Oberflächenschicht liegt dann auch ein ausreagierter Polyharnstoff vor, während innerhalb der Grenzschicht 17 das HDI Biuret zu einem Polyisocyanat von komplexer Struktur ausreagiert. Das Polyisocyanatendprodukt innerhalb der Grenzschicht 17 zeichnet sich durch eine hohe Haftfähigkeit bei einer gleichzeitig hohen Verankerungsfähigkeit der Aluminiumpartikel an der Luftfederbalgoberfläche aus.

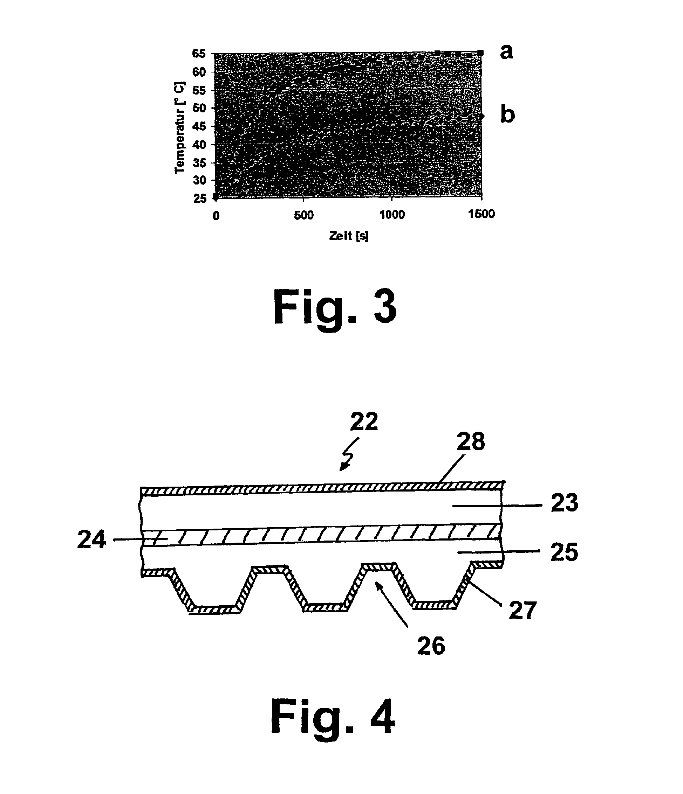

Fig. 3 zeigt anhand eines Kurvenverlaufs das Ergebnis eines Vergleichsversuchs, und zwar unter folgenden Kriterien:
- Ordinate:: Oberflächentemperatur in °C;
- Abszisse:: Zeit in Sekunden (s);
- Kurve a:: Temperaturverlauf eines Luftfederbalges ohne reflektierende Schutzschicht mit der klassischen schwarzen Farbe einer Vulkanisates;
- Kurve b:: Luftfederbalg mit einer reflektierenden Schutzschicht.

Beide Luftfederbälge werden aus 16 Zentimetern Entfernung mit einer 150-Watt-Lampe bestrahlt. Mit Hilfe eines Pyrometers werden die Temperaturen auf den Oberflächen der Luftfederbälge gemessen und über der Zeit aufgetragen. Wie der Kurvenverlauf gemäß Fig. 3 zeigt, steigt die Temperatur an der Oberfläche des beschichteten Luftfederbalges (Kurve b) wesentlich langsamer als bei dem unbeschichteten Luftfederbalg (Kurve a). Die Temperatur am Ende der Aufheizphase liegt bei dem beschichteten Luftfederbalg um etwa 17 Grad niedriger als bei dem Vergleichsmuster.

Ein zusätzlicher Vergleichsversuch mittels einer thermographischen Kamera unter Erfassung der Temperaturverteilung anhand eines Wärmebildes (hier nicht dargestellt) bestätigt den Unterschied der Oberflächentemperatur.

### Bezugszeichenliste

### (Teil der Beschreibung)

- 1: Luftfeder-Anordnung
- 2: Luftfederbalg
- 3: Deckel
- 4: Abrollkolben
- 5: volumenelastische Luftkammer
- 6: Innenschicht eines Luftfederbalges
- 7: Außenschicht eines Luftfederbalges
- 8: Festigkeitsträgerschicht eines Luftfederbalges
- 9: Schutzschicht mit Reflexionsfähigkeit
- 10: Grenzschicht der Schutzschicht
- 11: Mikropartikel (Metallpartikel) mit Reflexionsfähigkeit
- 12: Oberflächenschicht der Schutzschicht
- 13: Artikelrohling (Luftfederbalgrohling)
- 14: Suspension (Ausgangszustand)
- 15: erste Konzentrationsstufe der Suspension
- 16: Isocyanat-Diffusion
- 17: Grenzschicht
- 18: zweite Konzentrationsstufe der Suspension
- 19: Verdampfungszone des Lösungsmittels
- 20: Segretationsschicht unter Ausbildung der Oberflächcnschicht
- 21: Wasserdampf

## Patentansprüche

1. Schlauchförmiger Körper mit einem Grundkörper aus einem polymeren Werkstoff mit elastischen Eigenschaften, bestehend wenigstens aus einer Innenschicht (6) und Außenschicht (7), wobei die Außenschicht (7) vollständig oder teilweise mit einer Schutzschicht (9, 27, 28) versehen ist, wobei die Schutzschicht (9, 27, 28) mit dem Grundkörper einen Haftverbund bildet und einen polymeren Basiswerkstoff umfasst, in dem Mikropartikel (11) mit Reflexionsfähigkeit gegen elektromagnetische Strahlen eingemischt sind, **dadurch gekennzeichnet, dass** der polymere Basiswerkstoff der reflektierenden Schutzschicht (9, 27, 28) ein Polymerisat ist, das zumindest aus einem ersten Reaktionspartner in Form eines Isocyanats mit wenigstens zwei NCO-Gruppen und einem zweiten Reaktionspartner in Form von Wasser gebildet ist.

2. Schlauchförmiger Körper nach Anspruch 2, **dadurch gekennzeichnet, dass** bei der Bildung des Polymerisates der reflektierende Schutzschicht (9, 27, 28) ein dritter Reaktionspartner in Form eines Diols und/oder Polyols beteiligt ist.

3. Schlauchförmiger Körper nach Anspruch 1 oder 2, **dadurch gekennzeichnet, dass** das Isocyanat eine aliphatische Gerüststruktur aufweist.

4. Schlauchförmiger Körper nach Anspruch 3, **dadurch gekennzeichnet, dass** Tetramethylendiisocyanat, Hexamethylendiisocynat (HDI), Dodecamethylendiisocyanat, 1,4-Diisocyanato-cyclohexan oder Isophorondiisocyanat (IPPD) zum Einsatz gelangen.

5. Schlauchförmiger Körper nach Anspruch 1 oder 2, **dadurch gekennzeichnet, dass** das Isocyanat eine aliphatisch-aromatische Gerüststruktur aufweist.

6. Schlauchförmiger Körper nach Anspruch 5, **dadurch gekennzeichnet, dass** Diphenylmethan-diisocyanat (MDI) zum Einsatz gelangt.

7. Schlauchförmiger Körper nach einem der Ansprüche 1 bis 6, **dadurch gekennzeichnet, dass** das Isocyanat vor der Reaktion mit dem zweiten Reaktionspartner und dritten Reaktionspartner nach Anspruch 2 als Polyisocyanat, insbesondere als Trimer, Biuret oder als Urethdion, vorliegt.

8. Schlauchförmiger Körper nach einem der Ansprüche 1 bis 7, **dadurch gekennzeichnet, dass** die Mikropartikel (11) Metallpartikel sind.

9. Schlauchförmiger Körper nach Anspruch 1, **dadurch gekennzeichnet, dass** der schlauchförmige Körper ein Förderschlauch, ein Luftfederbalg (2) oder ein Kompensator ist.

10. Verfahren zur Herstellung eines schlauchförmigen Körpers mit einem Grundkörper aus einem polymeren Werkstoff mit elastischen Eigenschaften, bestehend wenigstens aus einer Innenschicht (6) und Außenschicht (7), wobei die Außenschicht (7) vollständig oder teilweise mit einer Schutzschicht (9, 27, 28) versehen ist, wobei die Schutzschicht (9, 27, 28) mit dem Grundkörper einen Haftverbund bildet und einen polymeren Basiswerkstoff umfasst, in dem Mikropartikel (11) mit Reflexionsfähigkeit gegen elektromagnetische Strahlen eingemischt sind, **gekennzeichnet durch** wenigstens folgende Verfahrensschritte:
- der Grundkörper des Artikels wird aus einer vulkanisierbaren Polymermischung unter Ausbildung des Artikelrohlings (13) gefertigt;
- auf die Oberfläche des Artikelrohlings (!3) wird vollständig oder teilweise eine Beschichtungsmasse aufgetragen, die eine Suspension (14) ist, bestehend wenigstens aus einem Lösungsmittel, einem ersten Reaktionspartner in Form eines Isocyanats mit wenigstens zwei NCO-Gruppen und den Mikropartikeln (11) mit Reflexionsfähigkeit;
- unter Verdunsten des Lösungsmittels bei Bildung einer Suspension (15,18) mit sich verändernden Konzentrationsstufen reagiert das Isocyanat zumindest mit einem zweiten Reaktionspartner in Form von Wasser (21) zu einer noch flexibel verformbaren Masse;
- nach einer Trocknungszeit wird der Artikelrohling (13) vulkanisiert, wobei zumindest innerhalb der sich bildenden Oberflächenschicht (12, 20) der Schutzschicht ein Ausreagieren der Reaktionspartner erfolgt, und zwar unter Ausbildung einer Schutzschicht (9, 27, 28) mit Reflexionsfähigkeit sowie unter Ausbildung eines dauerfesten Haftverbundes mit dem Grundkörper des Artikels.

11. Verfahren nach Anspruch 10, **dadurch gekennzeichnet, dass** als Lösungsmittel Toluol und/oder Xylol eingesetzt wird.

12. Verfahren nach einem der Ansprüche 10 bis 11, **dadurch gekennzeichnet, dass** in Bezug auf die Suspension (14) der Beschichtungsmasse das Isocyanat in einer Menge von 20 Gew.-% bis 50 Gew.-% eingesetzt wird.

13. Verfahren nach einem der Ansprüche 10 bis 12, **dadurch gekennzeichnet, dass** in Bezug auf die Suspension (14) der Beschichtungsmasse die Mikropartikel mit Reflexionsfähigkeit gegen elektromagnetische Strahlen in einer Menge von 5 Gew.-% bis 40 Gew.-% eingesetzt werden.

## Claims

1. Product in the form of a flexible tube with a basal structure made of a polymeric material with resilient properties, composed at least of an internal layer (6) and external layer (7), where a protective layer (9, 27, 28) has been provided to all or part of the external layer (7), where the protective layer (9, 27, 28) forms an adhesive bond with the basal structure and comprises a polymeric main material into which microparticles (11) capable of reflecting electromagnetic radiation have been mixed, **characterized in that** the polymeric main material of the reflective protective layer (9, 27, 28) is a polymer formed at least from a first reactant in the form of an isocyanate having at least two NCO groups and a second reactant in the form of water.

2. Product according to Claim 1 in the form of a flexible tube, **characterized in that** a third reactant in the form of a diol and/or polyol participates in the formation of the polymer of the reflective protective layer (9, 27, 28).

3. Product according to Claim 1 or 2 in the form of a flexible tube, **characterized in that** the structure of the isocyanate is aliphatic.

4. Product according to Claim 3 in the form of a flexible tube, **characterized in that** tetramethylene diisocyanate, hexamethylene diisocyanate (HDI), dodecamethylene diisocyanate, 1,4-diisocyanatocyclohexane or isophorone diisocyanate (IPDI) is used.

5. Product according to Claim 1 or 2 in the form of a flexible tube, **characterized in that** the structure of the isocyanate is aliphatic-aromatic.

6. Product according to Claim 5 in the form of a flexible tube, **characterized in that** diphenylmethane diisocyanate (MDI) is used.

7. Product according to any of Claims 1 to 6 in the form of a flexible tube, **characterized in that** before the reaction with the second reactant and third reactant according to Claim 2 the isocyanate takes the form of polyisocyanate, in particular of trimer, biuret or uretdione.

8. Product according to any of Claims 1 to 7 in the form of a flexible tube, **characterized in that** the microparticles (11) are metal particles.

9. Product according to Claim 1 in the form of a flexible tube, **characterized in that** the product in the form of a flexible tube is a conveying hose, an air-spring bellows (2) or a compensator.

10. Process for the production of a product in the form of a flexible tube with a basal structure made of a polymeric material with resilient properties, composed at least of an iriternal layer (6) and external layer (7), where a protective layer (9, 27, 28) has been provided to all or part of the external layer (7), where the protective layer (9, 27, 28) forms an adhesive bond with the basal structure and comprises a polymeric main material into which microparticles (11) capable of reflecting electromagnetic radiation have been mixed, **characterized by** at least the following steps:
- the basal structure of the item is manufactured from a vulcanizable polymer mixture, with formation of the preform (13) of the item;
- a coating composition is applied to all or part of the surface of the preform (13) of the item, and is a suspension (14) composed at least of a solvent, a first reactant in the form of an isocyanate having at least two NCO groups and the microparticles (11) capable of reflection;
- the isocyanate reacts at least with a second reactant in the form of water (21) with vaporization of the solvent and formation of a suspension (15, 18) with varying concentration levels, to give a composition that is still amenable to flexible deformation;
- after a drying time the preform (13) of the item is vulcanized, where at least within the surface layer (12, 20) that forms in the protective layer a reaction of the reactants is completed, and specifically with formation of a protective layer (9, 27, 28) capable of reflection, and also with formation of a durably strong adhesive bond with the basal structure of the item.

11. Process according to Claim 10, **characterized in that** toluene and/or xylene is used as solvent.

12. Process according to Claim 10 or 11, **characterized in that** the quantity used of the isocyanate in relation to the suspension (14) of the coating composition is from 20% by weight to 50% by weight.

13. Process according to any of Claims 10 to 12, **characterized in that** the quantity used of the microparticles capable of reflecting electromagnetic radiation, in relation to the suspension (14) of the coating composition, is from 5% by weight to 40% by weight.

## Revendications

1. Corps tubulaire comprenant un corps de base en un matériau polymère à propriétés élastiques, constitué par au moins une couche intérieure (6) et une couche extérieure (7), la couche extérieure (7) étant munie en totalité ou en partie d'une couche de protection (9, 27, 28), la couche de protection (9, 27, 28) formant avec le corps de base un composite par adhésion et comprenant un matériau de base polymère dans lequel des microparticules (11) réfléchissant les rayonnements électromagnétiques sont incorporées, **caractérisé en ce que** le matériau de base polymère de la couche de protection réfléchissante (9, 27, 28) est un polymère qui est formé à partir d'au moins un premier partenaire de réaction sous la forme d'un isocyanate contenant au moins deux groupes NCO et d'un deuxième partenaire de réaction sous la forme d'eau.

2. Corps tubulaire selon la revendication 1, **caractérisé en ce qu'**un troisième partenaire de réaction sous la forme d'un diol et/ou d'un polyol participe à la formation du polymère de la couche de protection réfléchissante (9, 27, 28).

3. Corps tubulaire selon la revendication 1 ou 2, **caractérisé en ce que** l'isocyanate comprend une structure de squelette aliphatique.

4. Corps tubulaire selon la revendication 3, **caractérisé en ce que** du diisocyanate de tétraméthylène, du diisocyanate d'hexaméthylène (HDI), du diisocyanate de dodécaméthylène, du 1,4-diisocyanato-cyclohexane ou du diisocyanate d'isophorone (IPDI) est utilisé.

5. Corps tubulaire selon la revendication 1 ou 2, **caractérisé en ce que** l'isocyanate présente une structure de squelette aliphatique-aromatique.

6. Corps tubulaire selon la revendication 5, **caractérisé en ce que** du diisocyanate de diphénylméthane (MDI) est utilisé.

7. Corps tubulaire selon l'une quelconque des revendications 1 à 6, **caractérisé en ce que** l'isocyanate se présente avant la réaction avec le deuxième partenaire de réaction et le troisième partenaire de réaction selon la revendication 2 sous la forme d'un polyisocyanate, notamment d'un trimère, de biuret ou d'uretdione.

8. Corps tubulaire selon l'une quelconque des revendications 1 à 7, **caractérisé en ce que** les microparticules (11) sont des particules métalliques.

9. Corps tubulaire selon la revendication 1, **caractérisé en ce que** le corps tubulaire est un tuyau de transvasement, un soufflet pneumatique (2) ou un compensateur.

10. Procédé de fabrication d'un corps tubulaire comprenant un corps de base en un matériau polymère à propriétés élastiques, constitué par au moins une couche intérieure (6) et une couche extérieure (7), la couche extérieure (7) étant munie en totalité ou en partie d'une couche de protection (9, 27, 28), la couche de protection (9, 27, 28) formant avec le corps de base un composite par adhésion et comprenant un matériau de base polymère dans lequel des microparticules (11) réfléchissant les rayonnements électromagnétiques sont incorporées, **caractérisé par** au moins les étapes de procédé suivantes :
- le corps de base de l'article est fabriqué à partir d'un mélange de polymères vulcanisable pour former une ébauche de l'article (13) ;
- un matériau de revêtement est appliqué en totalité ou en partie sur la surface de l'ébauche de l'article (13), ledit matériau de revêtement étant une suspension (14) constituée par au moins un solvant, un premier partenaire de réaction sous la forme d'un isocyanate contenant au moins deux groupes NCO et les microparticules (11) réfléchissantes ;
- avec évaporation du solvant lors de la formation d'une suspension (15, 18) à des niveaux de concentration variables, l'isocyanate réagit avec au moins un deuxième partenaire de réaction sous la forme d'eau (21) pour former une masse déformable encore flexible ;
- après un temps de séchage, l'ébauche de l'article (13) est vulcanisée, une réaction des partenaires de réaction ayant lieu au moins dans la couche de surface qui se forme (12, 20) de la couche de protection, et ce avec formation d'une couche de protection (9, 27, 28) réfléchissante et avec formation d'un composite par adhésion durable avec le corps de base de l'article.

11. Procédé selon la revendication 10, **caractérisé en ce que** du toluène et/ou du xylène sont utilisés en tant que solvant.

12. Procédé selon l'une quelconque des revendications 10 à 11, **caractérisé en ce que** l'isocyanate est utilisé en une quantité de 20 % en poids à 50 % en poids par rapport à la suspension (14) du matériau de revêtement.

13. Procédé selon l'une quelconque des revendications 10 à 12, **caractérisé en ce que** les microparticules réfléchissant les rayonnements électromagnétiques sont utilisées en une quantité de 5 % en poids à 40 % en poids par rapport à la suspension (14) du matériau de revêtement.
